# EUROPEAN PATENT SPECIFICATION

(11) **EP 2 166 764 B1**
(45) Date of publication and mention of the grant of the patent: **28.03.2018**
(21) Application number: 08105409.0
(22) Date of filing: 23.09.2008
(51) Int. Cl.: H04L 29/06, H04N 21/218, H04N 21/239, H04N 21/24, H04N 21/472, H04N 7/173

(54) **Method and system for a traffic management of video on demand services**
Verfahren und System für ein Verkehrsmanagement von Video-On-Demand-Diensten
Procédé et système pour la gestion de trafic de vidéo sur des services sur demande

(43) Date of publication of application: 24.03.2010
(73) Proprietor: Nokia Solutions and Networks Oy, 02610 Espoo (FI)
(72) Inventor: Schmidtke, Uwe, 17493 Greifswald (DE)
(74) Representative: Borgström, Markus

(56) References cited:
- EP-A- 1 788 774
- WO-A-01/55879
- WO-A-99/06913
- WO-A-2005/065165
- US-A1- 2008 209 481
- US-B1- 6 798 751
- DATABASE COMPENDEX [Online] ENGINEERING INFORMATION, INC., NEW YORK, NY, US; 1 March 2007 (2007-03-01), THOUIN F ET AL: "Video-on-demand networks: Design approaches and future challenges" XP002516305 Database accession no. E20071510542567 & IEEE NETWORK MARCH/APRIL 2007 INSTITUTE OF ELECTRICAL AND ELECTRONICS ENGINEERS INC. US, vol. 21, no. 2, March 2007 (2007-03), pages 42-48,

## Description

This invention relates to a method and system for a Traffic Management of the Video on Demand Services and Video Data Transfers in a Network, as well as to a Video Traffic Management Protocol and to a Worldwide Network as they are defined in the preambles of the respective independent claims.

WO 01/55879 A1 relates to a network and a method for acquiring broadcast content from content providers and delivering the acquired content to end users via a tiered network to minimize congestion during content delivery to thus provide high quality of service. There is employed a tiered internet-based network that is served by a hybrid satellite/optical fiber data distribution network. The network includes a data center to which data, such as streaming video data, is provided over a content acquisition network by content providers. The data center uplinks the data to at least one satellite and over an Internet or asynchronous transfer mode network, which distributes the data to the servers in the tiered network. The tiered network comprises several tiers. The tiers are referred to respectively as master data centers, regional data centers, and media serving centers that are interconnected by a private asynchronous transfer mode (ATM) network. A data director in the data center in cooperation with the ATM network determines which tier of servers can best fulfill a data request by an end user while minimizing the amount of hops required to provide such data.

US 2008/020948 A1 relates to an apparatus and a method for managing requests for video on demand media data for effecting VoD stream delivery, including an interface for receiving data requests addressed for processing by a particular data request service device, an agent operatively coupled to the interface and configured for selecting which of a number of different data request service devices to send the request, irrespective of the device to which the request is addressed, and/or a module for determining if a received request can be serviced by a preferred request service device based on its ability to service the request. The preferred device can be capable of servicing the request, the request is directed to that device, otherwise to another device, possibly the device to which the request is originally addressed. The preferred request service device can reside at an access node for delivering media services to subscriber equipment.

### Background of the Invention

It is known that a Video on Demand service consumes a high traffic volume within a network. For example one single video stream does need 2 - 3 Mbps and for HDTV according to MPEG4 standard 8 - 12 Mbps are necessary.

Due to the nature of VoD service video data traffic is increasing with the consumed bandwidth within the network with each additional customer who requests that service. Therefore it is difficult to calculate the bandwidth requirement for a network in order to support this service. To compare them, one Voice over IP stream is requiring approximately 100kbps of the available bandwidth. The VoD traffic consumes then about hundred times more bandwidth per session. So it is impossible to build up a network in order to support VoD service as an assured traffic, as it is possible for VoiP services.

On the other hand VoD data traffic is also a real time traffic and has therefore high demands on the Quality of Service (QoS) supported by the network. Just a best effort approach like for an Internet service is not possible. Especially the jitter and packet loss rate must be assured within low limits. Typical values for VoD traffic are end to end jitter less than 20ms and packet loss less than one per 30 minutes. That kind of traffic cannot be overbooked in the network. For example in the Access Network, as one piece of the whole network, usually CoS 4 with jitter ≤ 5ms and priority 6 and 7 according to 802.1Q will be used for VoD.
When there is an overbooking of VoD traffic in a network no one would get a right video quality at all.

The other QoS parameter, the delay, will be measured as a round trip delay which is the reaction time when one request a stream and should be less than 2 seconds. But this is more a requirement for a Set Top Box (STB) and the video server, than for the network. This must also be taken under consideration for the control mechanism of the following invention.

In order to support both the high bandwidth demands requirement, which are very difficult to calculate, and the high QoS requirement, which prohibits a best effort approach, there is an advanced Traffic Management required. Static approaches based on fixed configured paths in conjunction with queuing and prioritisation based on traffic classes in each node seems to be not sufficient.

Currently network providers are building up networks in order to support the so called triple play services based on High Speed Internet (HIS), Broadcast TV (BTV) / VoD service and Voice over IP, VoIP, service.

The HIS is easy to calculate based on the sold service level agreement (SLA) and can be supported as a mix of assured and best effort bandwidth.

Broadcast TV is an effective way of distributing video stream due to the used multicast scheme. It is also performing a real time traffic, but in that case the whole traffic is never higher than the sum of all channels independent of the amount of customers who join each channel. Therefore BTV traffic is also not difficult to calculate.

VoIP traffic consumes a relatively small bandwidth. Therefore the sum of all VoIP traffic can be usually calculated as assured or fixed assigned bandwidth without overbooking within the network.

It remains the big unknown topic in the case of Video on Demand. In current deployments we see that the VoD service is not yet used by a big amount of customers.

Currently VoD service can be supported in two main ways:

### Progressive download

The customer is loading a video data file from the network and storing it at the own hardware device. During the download the customer can already view the video.

The advantage is that the customer can see the video more than one time without loading it again from network. The disadvantage is that the customer's premises device (CPE) needs the capability to store that amount of data.

### Streaming

The customer is loading the video data and watching it at the same time. The main advantage of streaming is that the customer needs not to store the data in the own equipment, but the disadvantage is that if the customer wants to see the same video again he has to stream it again from the network.

For a better understanding of the prior art relating to Video on Demand applications, the following two figures are used:

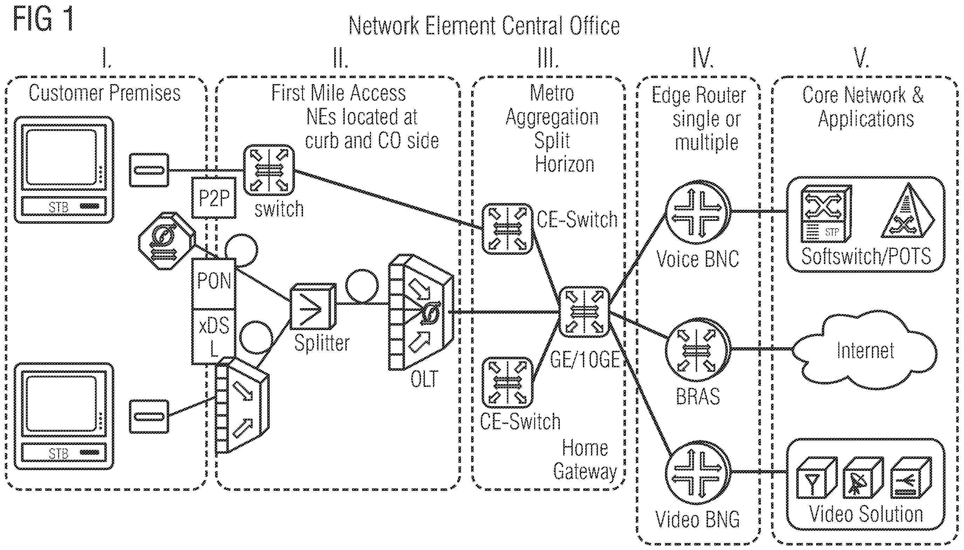

Fig. 1 shows a Network structure in current networks of the prior art with a centralized Video Solution.
   There are different kinds of Customer Premises Equipments (CPEs) for the different kinds of services. In case of VoD we have usually a separated Set Top Box (STB) which receives the video stream from the network and transforms it into different kind of interfaces in order to connect the device where one can see the video file, usually a television. Besides, an ordinary PC can also be used. In figure 1 a centralized Video Solution behind an Edge Router is to see. The video session is established between a central video solution server and the CPE via different network stages.

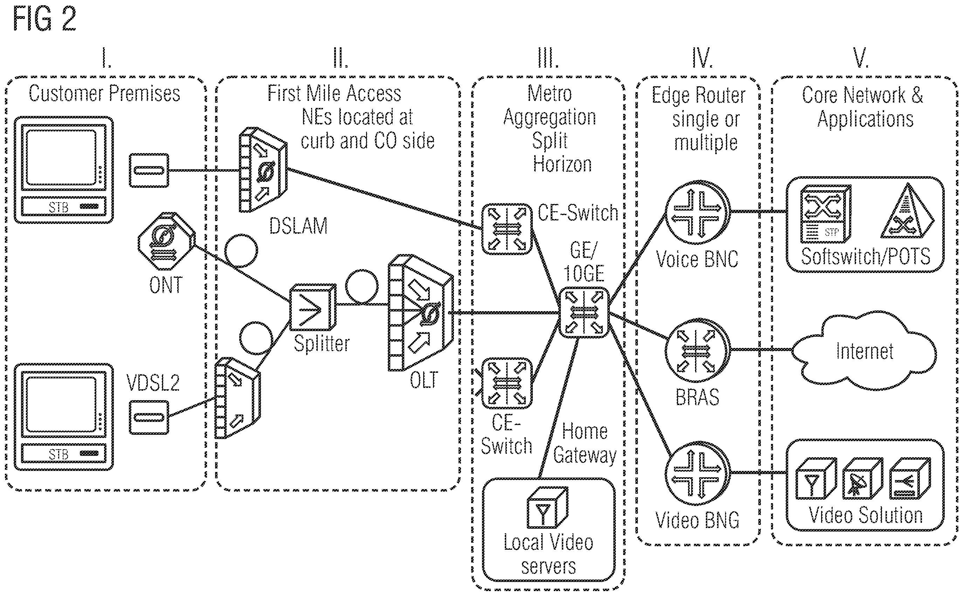

Fig. 2 shows the Network structure in current networks of the prior art with a decentralized Video Solution using Local Video Servers LVS.

Some network providers have already distributed some improvements in the case when the VoD traffic increases. One procedure is to deploy local video servers (LVS) nearer to the customers. In that solution only one local VoD platform serves all customers which are aggregated within that respective network area. The following invention goes in line with that tendency to have distributed video server platforms nearer to the customer site.

Current video solutions are mainly based on the Real Time Streaming Protocol (RTSP according to RFC2326) between a Set Top Box (STB) and a Video Platform. The access nodes themselves are involved in a transparent way only. The STB needs its intelligence to support a relevant video platform including the control plane feature.

All network elements are supporting Traffic Management (TM) features which work together in order to secure the right QoS of the network. But all features are not related to the VoD control plane. The network supports the VoD service in a transparent way. There is no overall concept known dedicated for Video on Demand.

At the customer premises one can use e.g. a PC where all scheduling and buffering is done by the software using the CPU. A better quality support is assured by a dedicated STB with a specially dedicated hardware for buffering and scheduling. The most important parameters to define a CoS are the delay, jitter and packet loss rate (PLR).

Within the network there are different Classes of Service (CoS) distinguished. For each class of service the network provider defines the parameters which the network should maintain.

In the following a typical definition for an access network coming from the GPON standard ITU-T G.984 is depicted. There are four different Classes of Services (CoS) defined and the related parameters are:
CoS4: Low Delay, Low Jitter, Low PLR
CoS3: Medium Delay, Medium Jitter, Low PLR
CoS2: Medium Delay, Medium Jitter, Medium PLR
CoS1: High Delay, High Jitter, High PLR (this CoS type includes best effort traffics)

With the following table 1 parameters are mapped between the user and the network interface:

**Table 1.**

| | **Low** | **Medium** | **High** |
|---|---|---|---|
| **Delay** | 5ms | 100ms | 500ms |
| **Jitter** | 2/5ms (DS/US) | 15ms | 40ms |
| **PLR** | 10⁻⁶ | 10⁻⁵ | 10⁻⁴ |

In case of a Carrier Ethernet based network the priority bits as part of the VLAN tags according to IEEE 802.1Q are defining the CoS. With the priority bits it is possible to distinguish up to 8 different CoS.

The following table 2 depicts a typical mapping between CoS, performance parameters and 802.1Q priority bits.

**Table 2.**

| CoS | Performance | | | Equivalent |
|---|---|---|---|---|
| | Delay | PLR | Jitter | 802.1Q |
| 4 | 5ms | 10⁻⁶ | 5ms | 6,7 |
| 2,3 | 100ms | 10⁻¹/10⁻⁶ | 15ms | 2,3,4,5,(6,7) |
| 1 | 500ms | 10⁻⁴ | 40ms | 0,1 |

Video traffic should be treated as a real time traffic with CoS4 to get best traffic performance.

In the next layer, the IP layer 3, the TOS/DSCP values (Differentiated Services, RFC 2474, RFC 2475) are defining how the frame has to be treated from TM point of view in each of the nodes.

At the customer edge we have usually ingress policing and egress shaping per subscriber port and/or service (usually assigned with a VLAN) and/or CoS (usually assigned with 802.1q priority bits).

At each aggregation stage the nodes are supporting scheduling with different schemes, queuing, shaping and prioritisation based on the descript Layer 2 or Layer 3 settings.
GPON is supporting the so called Dynamic Bandwidth Assignment (DBA) for the upstream of data (from user to the network). But due to the fact that VoD streams are usually downstream traffic it is not useful for that discussed service.

VoD shares the same CoS and therefore the same treatment with other real time traffic like BCTV and VoIP. There is no special mechanism implemented for VoD. But as explained before, VoD has special requirements and problems in that term. There is also no relationship between the VoD Control Plane and the Traffic Management implemented.

In case of using Layer 2 Ethernet there are no mechanisms available to manage the traffic dependent on the used bandwidth. As explained in case of VoD the network cannot be assigned in that way to support the worst case for the traffic volume where all subscribers or a huge number of subscribers are joining the VoD service at the same time. On the other hand VoD traffic is very sensitive for QoS parameters especially in case of streaming. So the current approaches would not be sufficient if the VoD service will be increased.

The RTSP is usually used as control protocol between a STB and a video server. It is a network protocol and uses UDP or TCP frames. The RTSP is establishing a session between the STB and the video server. The stream itself will be forwarded based on UDP or RTP frames. The control Plane for the stream is using RTCP in case of RTP streams. All of these mechanisms are working as end-to-end without involving the network nodes in the middle.

Advanced STBs already have a resource controller implemented in order to avoid an overbooking of the network connection between STB and the network. But it is currently not ship related to the bandwidth conditions in the network and the video server.

Some suppliers have seen the above mentioned problem with VoD and introduced a so called resource controller into the network. That resource controller counts the running video streams and is checking if the network connection to the video server can support a new requested video stream or not. That solution is just avoiding an overbooking of the network. It blocks new requests in order to secure running streams. It is therefore actually not a Traffic Management.

The object of the invention is to improve and enhance existing Video on Demand mechanisms within a network in a way that the solution stays compatible with it, does not require any changes to Customer Premises Equipment and assures a higher Quality of Service in streaming individually requested Video Data to a plurality of customers.

### Summary of the Invention

The object of the present invention is achieved according to the set of independent and dependent claims. For a better understanding of the invention, the following figures are used for depicting some preferred embodiments ac-cording to the present invention:
Fig. 3 shows a network structure in a network according to the invention with Local Video Servers.
Fig. 4 shows an overview of involved network nodes and Traffic Management functions.
Fig. 5 shows message sequences between involved network nodes if one LVS has the requested video data file.
Fig. 6 shows message sequences between involved network nodes if no LVS has the requested video data file.
Fig. 7 shows message sequences between involved network nodes if more then one LVS has the requested video data file.

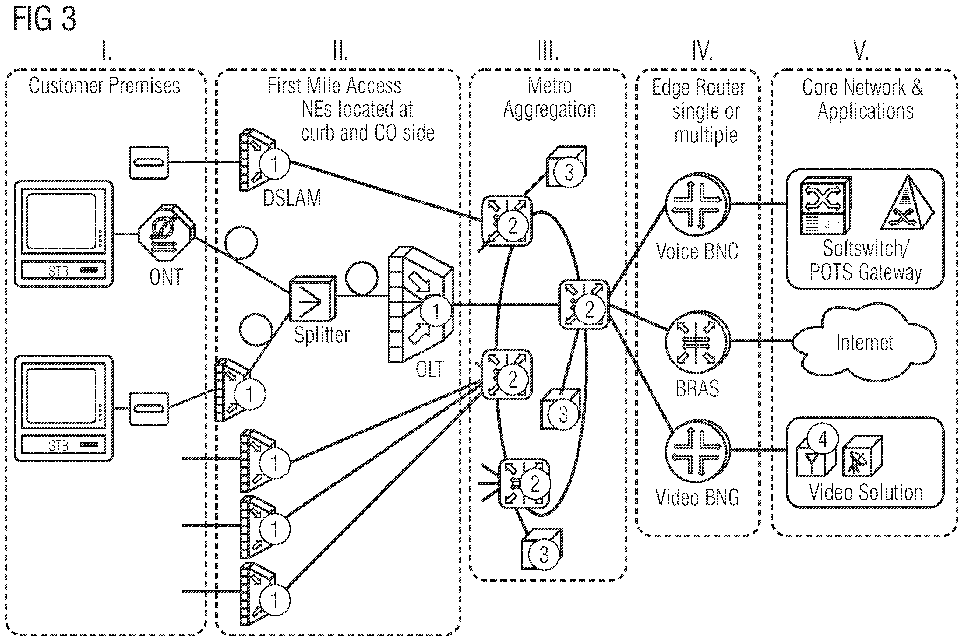

Fig. 3 shows a network structure comprising Network Structure Levels I, II, III, IV, V with at least a Customer Premises Equipment CPE at customer premises, First Mile Access equipments for connecting CPEs to the network, Metro Aggregation Equipments comprising Local Video Servers (LVS) that are storing distributed copies of video data files and Edge Router Equipments for distributing data traffic in the network and Core Network Applications with at least one Video Head End, which Video Head End (VHE) stores a plurality of original video data files in a network according to the invention with Local Video Servers LVS.

The main point of the present invention is an additional common control plane between network nodes and local video servers besides the existing one. The customer premises equipment stays completely out of scope of the invention. Another object of the invention is to hide that new feature from CPE in order to keep it as it is for the customers.
The solution is compatible to the existing VoD mechanism and implements an enhancement of that mechanism.

In figure 3 the circles 1 - 4 are depicting the nodes implementing a control plane according to the present invention for the Video on Demand Traffic Management.
The Access Node 1 can be e.g. a PON-system, DSLAM or a Point-to-Point access switch or the like.

Between all depicted nodes a new Video Traffic Management Protocol according to the present invention, from now called VTMP, is established.

This VTMP is established between the Local Video servers 3 and the Access Nodes 1. The aggregation switches are implementing a respective gateway but preferably do not terminate that protocol.

As can be seen there is more than one local video server LVS located within the aggregation network domain. That is one base of the concept of the present invention. The Access nodes function as proxies between video clients (STB, PC) and video server for the Video Control Protocol, but not for the video stream itself. For the stream itself the AN remains transparent. Usually RTSP is used as a Video Control Protocol.

The Access Node has means to decide which local video server LVS will be used for the respective VoD transfer to the client. The decision can be done based on the information from the Access Node received through VTMP. From the video client's point of view there is no difference at all. The video solution including RTSP does function as before if seen from STB and video server points of view.

The VTMP according to the present invention is implemented to support the following tasks:
1. topology investigation
2. discovering the best local video server

### 1. Topology investigation

The local video server announces via VTMP that they are available in the network. The aggregation switches forward these messages and adds information about the so called path costs. The access nodes are receiving those announcements in order to hold each a local data base about available local video servers in the domain. The information of this data base is used, when a request for a video data file reaches the respective AN to send a request from AN to at least one LVS.

The so called path costs can be determined by the hop counts and/or the bandwidth at each link point.

### 2. Discovering the best Local Video Server (LVS)

A Customer Premises Equipment CPE, e.g. the STP, gets only a generic configuration in order to find the right video server.

The Access Node 1 terminates the RTSP requests and starts to investigate the best local video server by sending a request via VTMP. Now different cases can be distinguished:
a) several or one LVS is answering with an offer, because of having already stored that video:
   - the AN is selecting the LVS which answers with an offer and having the best path cost or is the only one with an offer;
   - the AN is then forwarding the RTSP to that selected LVS.
b) there is no offer from a LVS with information about a stored video available:
   - the AN is just selecting the LVS with the best path cost;
   - then the AN is forwarding the RTSP to that selected LVS;
   - the LVS is then requesting the video from the video head end VHE (to do this LVS has information about the VHE);
   - the LVS is then forwarding the video data stream to the client and stores this stream in its video cache, so next time this LVS would send an offer when requested for that special video data file.

In order to have a dynamic component the LVS can add the currently used number of video streams and the related bandwidth for each offer and also a performance indication in order to avoid a server overload.

Each VTMP gateway located at each hop is also counting the transported video streams and the related bandwidth for each link and adds that information when it forwards the VTMP offer.
The AN can then decide based on topology and dynamical information which LVS is to be used for the best quality and performance of a video session.

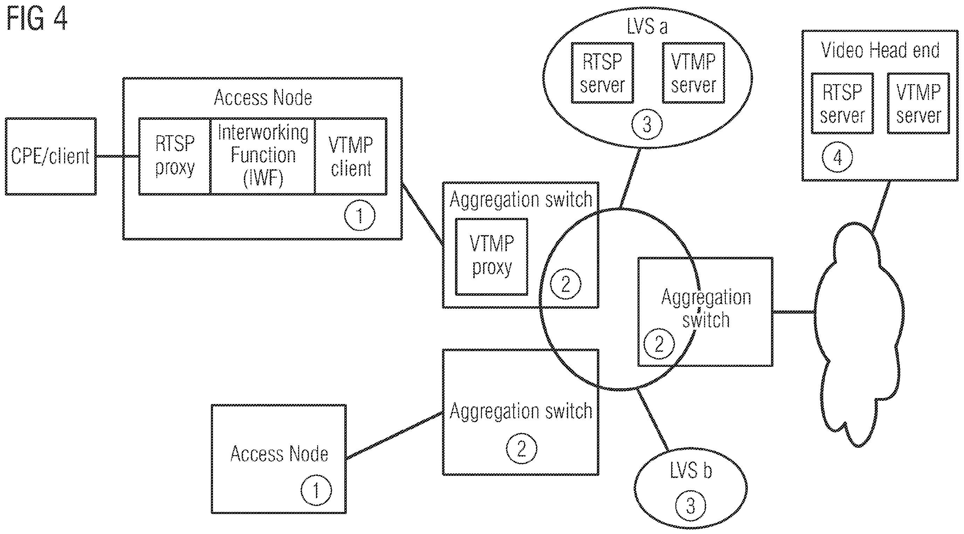

Fig. 4 shows an overview of involved network nodes and TM functions.

The VoD Management Traffic Protocol can be based on IPv4 or IPv6 Multicast and/or Unicast Transport Layer. Alternative Peer-To-Peer or other mechanisms can be used which allow to address a group or/and a dedicated network node.

Figure 4 depicts again the involved network nodes CPE, Access Node AN, Aggregation Switch, Local Video Server SVL and the video head end VHE. The access nodes are located at the boarder between customer premises and the provider network. The access node implements a proxy for the video control protocol. In that example RTSP is assumed as a video control protocol which is usually used between a CPE and a video server.

The CPE is getting per configuration the IP address of the RTSP proxy located at the AN. So from CPE point of view the proxy acts as a video server.

The AN 1 implements preferably three functions: the RTSP proxy, the VTMP client and an interworking function between both. The RTSP proxy functions as a proxy between the RTSP clients located at the CPE side and the LVS. The interworking function coordinates the RTSP proxy and the VTMP client.

The Aggregation switch implements preferably a VTMP Gateway function. That function is forwarding the VTMP messages and is adding the path cost and link state information to the message.

The LVS implements the RTSP and VTMP server function. The RTSP function is the ordinary video control plane implementation and needs not being adapted for the above described feature. The VTMP server works together with the VTMP client at the AN in order to find from TM point of view the best LVS.

The VTMP server function at the Video head end is optional. The communication between LVS and video head end VHE can usually remain as it is.

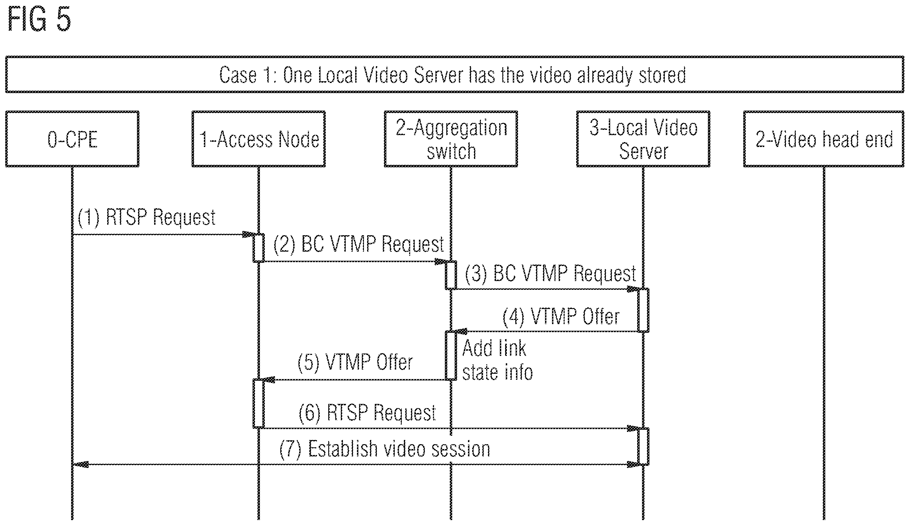

Fig. 5 shows message sequences between involved network nodes if one LVS has the requested video data file.

The message sequence starts with the RTSP request from CPE. This is the ordinary implementation. As explained above there is no change or enhancement in hardware or software at the CPEs necessary in order to support that mechanism of the present invention. The connected AN terminates that request and first starts to investigate the best LVS. In this case only one LVS answers about an already stored Video Data File. Therefore the AN is selecting that certain LVS and forwards from now on all RTSP messages to that LVS. From now on the whole RTSP traffic and the video session are established between the requesting CPE and the selected LVS as described before.

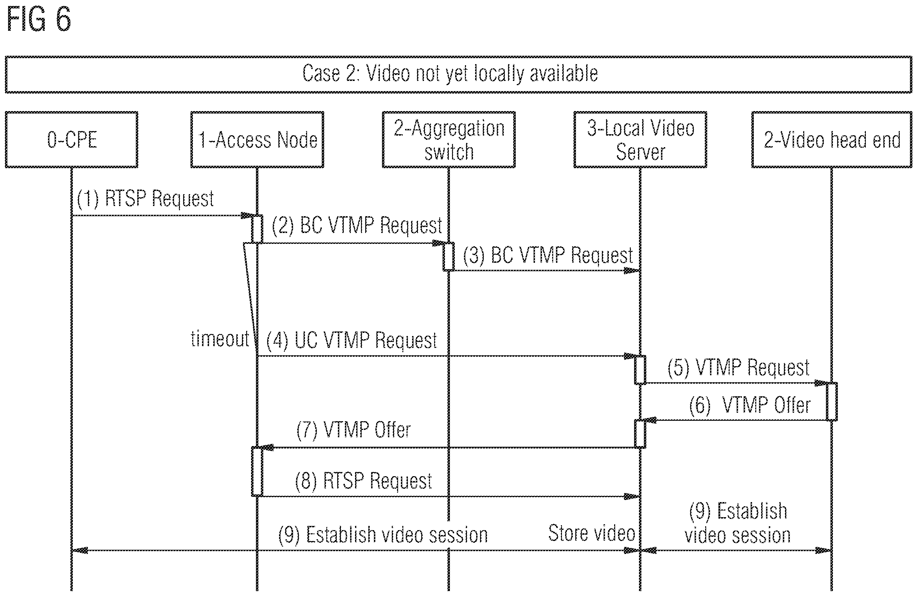

Fig. 6 shows message sequences between involved network nodes if no LVS has the requested video data file.

This chart depicts the case wherein the requested video file is not stored yet in all of the available LVSs. Therefore all LVSs do not answer the Broadcast BC VTMP request. In that case the AN is selecting the best connected LVS based on the own stored data base and sends a direct Unicast UC VTMP request to the LVS. When the LVS receives a Unicast UC VTMP request it is requesting the video file from the video head end VHE and is answering then with an offer to the AN. The LVS loads then the requested video from the video head end VHE for example into the own video cache and establishes a video session with the requesting CPE.

The case, that several video servers LVS have stored the requested video file and are answering with an offer, should be assumed as very seldom. As explained before, in that case the AN is selecting the best connected LVS from that group of LVSs.

The present chart shows that the AN is starting a timer and after its timeout is sending a dedicated request to the best connected LVS. That mechanism can be enhanced further in order to reduce the delay time caused by the VTMP protocol. One solution can be that the AN is sending both, the unicast and multicast VTMP requests simultaneously and chooses the best connected one if there is no reaction from another LVS which has already stored the video.

For the topology investigation the AN, LVS and aggregation switch are supporting following functions:
Announcement of a new LVS
   - if a LVS is coming up in the network it sends a VTMP announcement about its own presence;
   - the aggregation switch is forwarding the announcement and adds information about path costs;
   - the AN is receiving the announcements of LVSs and builds up a local data base about available LVS.
An Access Node is coming up into the network
   - the AN is sending a network topology request;
   - all LVSs within the domain are sending a respective VTMP announcement about there own presence;
   - the aggregation switch is forwarding the announcement and adds information about path costs;
   - the AN is receiving the announcements of LVSs and builds up a local data base about available LVS.
Forced Cancellation of a LVS
   - the LVS which will be shut down is sending a VTMP cancellation message;
   - the aggregation switch is forwarding the cancellation;
   - the AN receives the cancellation and updates the data base about available LVS without the cancelled LVS.

If a LVS does not react to a dedicated unicast VTMP request it will be also deleted from the data base in the ANs.
A keep-alive mechanism using VTMP can be optionally also implemented.

The topology information is actually only necessary in order to find the best connected LVS. With the mechanism for cancelling a LVS which does not answer the object can also be addressed.

Another preferred embodiment can be that always all available LVSs are answering with a VTMP offer independent whether they already have stored the requested video file or not and this offer does contain the information about the availability of the video at the LVS. Then the respective AN can select the best LVS based on the path cost information and the video availability. For this selection a preferred algorithm will be implemented using weighted path costs and video availability information.

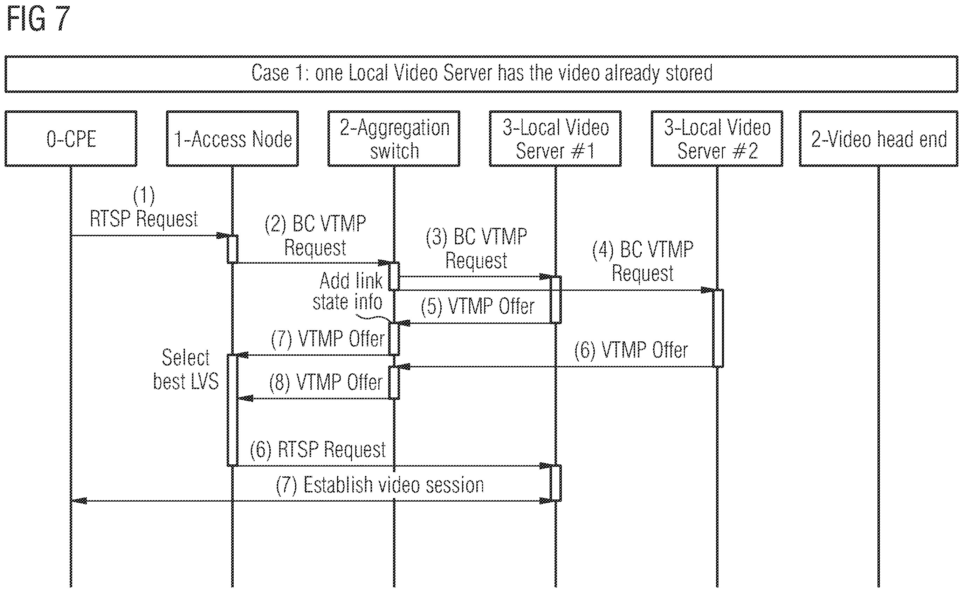

Fig. 7 shows message sequences between involved network nodes if more than one LVS has the requested video data file.

This figure depicts another case wherein LVS#1 has the requested video file already stored, but nevertheless also a LVS #2 is sending an offer. In that example the AN selects the LVS#1 with the already available requested video file. This is just a preferred embodiment. Other embodiments are possible depending on the implementation of the algorithm which is chooses the best LVS based on all available information.

With that special embodiment of the present invention a topology data base about all available LVSs stored in the respective ANs is not necessary, because the AN receives the offers always permanently from all LVSs.

As already mentioned above for the implementation IPv4 or IPv6 unicast and multicast transport layers can be used. But also a Peer to Peer mechanism between the nodes can be used in order to deploy the control plane between all involved network elements.

## Claims

1. A method for a Traffic Management of the Video on Demand Services and Video Data Transfers in a Network,
comprising steps of
- Sending, via a real time streaming protocol, a RTSP request for a Video Data File from a Customer Premises Equipment (CPE) to an Access Node (AN), which does hold a Data Base about available Local Video Servers (LVS), the Data Base holding announcement messages announcing availability of the Local Video Servers (LVS) wherein information is added to the announcement messages about path costs determined by at least one of the hop counts and/or the bandwidth at each link node and/or the number of streams available and/or the Data Transfer Rate and/or the Quality of Service (QoS) and/or the Class of Service (CoS);
- investigation for the Local Video Server (LVS) with the best path cost through the requested Access Node (AN) by sending a request for the Video Data File via a Video Traffic Management Protocol (VTMP), the Video Traffic Management Protocol supporting topology investigation and discovering the local video server with the best path cost;
- when at least one Local Video Server (LVS) answers with an offer, because it has already stored that requested Video Data File:
∘ the Access Node (AN) selects the Local Video Server (LVS) which answers with an offer with the best path cost or, if such is not found, the only one available;
∘ then the Access Node (AN) is forwarding the RTSP request to that selected Local Video Server (LVS).
- when there is no offer from anyone of the Local Video Servers (LVS) about availability of requested Video Data File:
∘ the Access Node (AN) is selecting, from the data base, the one Local Video Server (LVS) with the best path cost;
∘ then the Access Node (AN) is forwarding the RTSP request to the selected Local Video Server (LVS);
∘ this selected Local Video Server (LVS) is then requesting the requested Video Data File from the Video Head End (VHE);
then the Local Video Server (LVS) is forwarding a Video Data Stream to the requesting client (CPE) and stores this Video Data Stream in a video cache wherein the investigation of the best path cost among a plurality of Local Video Servers (LVS) is implemented through comparison of available information about respective path costs.

2. A method according to claim 1, wherein each of the Local Video Servers (LVS) is announcing to the Access Node (AN), that it is available over the network, via an announcement message according to the Video Traffic Management Protocol (VTMP) .

3. A method according to claim 2, wherein at least one aggregation switch is forwarding that announcement message to the Access Node (AN) and adding to it the information about the path costs.

4. A method according to claim 3, wherein the Access Node (AN) is receiving this announcement message with the information added in order to hold it in the data base.

5. A method according to at least one of the foregoing claims, wherein the Access Node (AN) functions as a proxy for the Real Time Streaming Protocol between the Local Video Servers (LVS) and Access Nodes (AN) and is transparent for the stream of Video Data.

6. A network comprising Network Structure Levels (I, II, III, IV, V) with at least a Customer Premises Equipment (CPE) at customer premises, First Mile Access equipments for connecting the CPE to the network, Metro Aggregation Equipments comprising Local Video Servers (LVS) that are storing distributed copies of video data files and Edge Router Equipments for distributing data traffic in the network and Core Network Applications with at least one Video Head End (VHE), which Video Head End (VHE) stores a plurality of original video data files, wherein each of the Network Structure Levels includes at least one component with a respective means designed to execute a method of a Traffic Management of the Video on Demand Services and Video Data Transfers according to one of the above claims.

7. System for a Traffic Management of the Video on Demand Services (TMVDS) and Video Data Transfer in a network, the system adapted to perform any one of the method claims 1-5.

8. System for a Traffic Management according to claim 7, wherein the Customer Premises Equipment is implemented as a Personal Computer or as a Set Top Box or as a television.

## Patentansprüche

1. Verfahren für ein Traffic Management der Video on Demand Services und Video Data Transfers in einem Netzwerk,
umfassend folgende Schritte:
- Senden, über ein Echtzeit-Streamingprotokoll, einer RTSP-Anforderung nach einer Video Data File von einem Customer Premises Equipment (CPE) an einen Access Node (AN), der eine Datenbank über verfügbare Local Video Servers (LVS) speichert, wobei die Datenbank Ankündigungsnachrichten speichert, die die Verfügbarkeit der Local Video Servers (LVS) ankündigen, wobei Informationen zu den Ankündigungsnachrichten über Pfadkosten hinzugefügt werden, bestimmt durch mindestens eine der Sprunganzahl und/oder der Bandbreite jedes Linkknotens und/oder der Anzahl verfügbarer Streams und/oder der Data Transfer Rate und/oder der Dienstgüte (QoS) und/oder der Dienstklasse (CoS) ;
- Untersuchen für den Local Video Server (LVS) mit den besten Pfadkosten durch den angeforderten Access Node (AN) durch Senden einer Anforderung nach der Video Data File über ein Video Traffic Management Protocol (VTMP), wobei das Video Traffic Management Protocol eine Topologieuntersuchung stützt und den Local Video Server mit den besten Pfadkosten entdeckt;
- wenn mindestens ein Local Video Server (LVS) mit einem Angebot antwortet, weil er bereits die angeforderte Video Data File gespeichert hat:
∘ der Access Node (AN) wählt den Local Video Server (LVS), der mit einem Angebot mit den besten Pfadkosten antwortet, oder, falls ein solcher nicht gefunden wird, den einzigen verfügbaren;
∘ dann leitet der Access Node (AN) die RTSP-Anforderung an diesen gewählten Local Video Server (LVS) weiter,
- wenn kein Angebot von irgendeinem der Local Video Servers (LVS) über die Verfügbarkeit einer angeforderten Video Data File vorliegt:
∘ der Access Node (AN) wählt aus der Datenbank den einen Local Video Server (LVS) mit den besten Pfadkosten;
∘ dann leitet der Access Node (AN) die RTSP-Anforderung an den gewählten Local Video Server (LVS) weiter;
∘ dieser gewählte Local Video Server (LVS) fordert dann die angeforderte Video Data File von dem Video Head End (VHE) an;
dann leitet der Local Video Server (LVS) einen Video Data Stream an den anfordernden Client (CPE) weiter und speichert diesen Video Data Stream in einem Video-Cache, wobei die Untersuchung der besten Pfadkosten unter mehreren Local Video Servers (LVS) durch Vergleich verfügbarer Informationen über jeweilige Pfadkosten implementiert wird.

2. Verfahren nach Anspruch 1, wobei jeder der Local Video Servers (LVS) dem Access Node (AN) ankündigt, dass er über das Netzwerk verfügbar ist, über eine Ankündigungsnachricht gemäß dem Video Traffic Management Protocol (VTMP).

3. Verfahren nach Anspruch 2, wobei mindestens ein Aggregation Switch diese Ankündigungsnachricht an den Access Node (AN) weiterleitet und ihr die Informationen über die Pfadkosten hinzufügt.

4. Verfahren nach Anspruch 3, wobei der Access Node (AN) diese Ankündigungsnachricht mit den hinzugefügten Informationen empfängt, um sie in der Datenbank zu speichern.

5. Verfahren nach mindestens einem der obigen Ansprüche, wobei der Access Node (AN) als ein Proxy für das Real Time Streaming Protocol zwischen den Local Video Servers (LVS) und den Access Nodes (AN) fungiert und für den Stream von Video-Daten transparent ist.

6. Netzwerk umfassend Network Structure Levels (I, II, III, IV, V) mit mindestens einem Customer Premises Equipment (CPE) an Kundenstandorten, First Mile Access-Geräte zum Verbinden des CPE mit dem Netzwerk, Metro Aggregation Equipments umfassend Local Video Servers (LVS), die verteilte Kopien von Video Data Files speichern, und Edge Router Equipments zum Verteilen von Datenverkehr in dem Netzwerk und Core Network Applications mit mindestens einem Video Head End (VHE), welcher Video Head End (VHE) mehrere originale Video Data Files speichert, wobei jeder der Network Structure Levels mindestens eine Komponente mit einem jeweiligen Mittel enthält, das ausgelegt ist zum Ausführen eines Verfahrens eines Traffic Management der Video on Demand Services und Video Data Transfers gemäß einem der obigen Ansprüche.

7. System für ein Traffic Management der Video on Demand Services (TMVDS) und Video Data Transfer in einem Netzwerk, wobei das System ausgelegt ist zum Durchführen eines beliebigen der Verfahrensansprüche 1-5.

8. System für ein Traffic Management nach Anspruch 7, wobei das Customer Premises Equipment als ein Personal Computer oder als eine Set-Top-Box oder als ein Fernseher implementiert ist.

## Revendications

1. Un procédé de gestion de trafic de services de vidéo à la demande et de transferts de données vidéo dans un réseau, comprenant les étapes suivantes :
- l'envoi, par l'intermédiaire d'un protocole de diffusion en continu en temps réel, d'une demande de RTSP relative à un fichier de données vidéo à partir d'un équipement de locaux d'abonné (CPE) vers un noeud d'accès (AN), qui contient une base de données de serveurs vidéo locaux (LVS) disponibles, la base de données contenant des messages d'annonce annonçant une disponibilité des serveurs vidéo locaux (LVS), des informations étant ajoutées aux messages d'annonce concernant des coûts de trajet déterminés par au moins un élément parmi les décomptes de bonds et/ou la bande passante à chaque noeud de liaison et/ou le nombre de flux disponibles et/ou le débit de transfert de données et/ou la qualité de service (QoS) et/ou la classe de service (CoS),
- la recherche du serveur vidéo local (LVS) avec le meilleur coût de trajet par l'intermédiaire du noeud d'accès demandé (AN) par l'envoi d'une demande relative au fichier de données vidéo par l'intermédiaire d'un protocole de gestion de trafic vidéo (VTMP), le protocole de gestion de trafic vidéo prenant en charge la recherche de topologie et la découverte du serveur vidéo local avec le meilleur coût de trajet,
- lorsqu'au moins un serveur vidéo local (LVS) répond avec une offre, parce qu'il a déjà conservé en mémoire ce fichier de données vidéo demandé :
∘ le noeud d'accès (AN) sélectionne le serveur vidéo local (LVS) qui répond avec une offre avec le meilleur coût de trajet ou, si un tel serveur n'est pas trouvé, le seul serveur disponible,
∘ ensuite le noeud d'accès (AN) transmet la demande de RTSP à ce serveur vidéo local (LVS) sélectionné.
- lorsqu'il n'existe aucune offre d'aucun des serveurs vidéo locaux (LVS) concernant une disponibilité du fichier de données vidéo demandé :
∘ le noeud d'accès (AN) sélectionne, à partir de la base de données, le serveur vidéo local (LVS) avec le meilleur coût de trajet,
∘ ensuite le noeud d'accès (AN) transmet la demande de RTSP au serveur vidéo local (LVS) sélectionné,
∘ ce serveur vidéo local (LVS) sélectionné demande ensuite le fichier de données vidéo demandé à la tête de réseau vidéo (VHE),
ensuite le serveur vidéo local (LVS) transmet un flux de données vidéo au client demandeur (CPE) et conserve en mémoire ce flux de données vidéo dans une mémoire tampon vidéo dans laquelle la recherche du meilleur coût de trajet parmi une pluralité de serveurs vidéo locaux (LVS) est mise en oeuvre par la comparaison d'informations disponibles concernant des coûts de trajet respectifs.

2. Un procédé selon la revendication 1, dans lequel chacun des serveurs vidéo locaux (LVS) annonce au noeud d'accès (AN) qu'il est disponible par le réseau par l'intermédiaire d'un message d'annonce en fonction du protocole de gestion de trafic vidéo (VTMP).

3. Un procédé selon la revendication 2, dans lequel au moins un commutateur d'agrégation transmet ce message d'annonce au noeud d'accès (AN) et y ajoute les informations concernant les coûts de trajet.

4. Un procédé selon la revendication 3, dans lequel le noeud d'accès (AN) reçoit ce message d'annonce avec les informations ajoutées afin de le conserver dans la base de données.

5. Un procédé selon l'une quelconque des revendications précédentes, dans lequel le noeud d'accès (AN) fonctionne en tant que mandataire pour le protocole de diffusion en continu en temps réel entre les serveurs vidéo locaux (LVS) et les noeuds d'accès (AN) et est transparent pour le flux de données vidéo.

6. Un réseau comprenant des niveaux de structure de réseau (I, II, III, IV, V) avec au moins un équipement de locaux d'abonné (CPE) dans des locaux d'abonné, des équipements d'accès de premier kilomètre destinés au raccordement du CPE au réseau, des équipements d'agrégation métro comprenant des serveurs vidéo locaux (LVS) qui conservent en mémoire des copies distribuées de fichiers de données vidéo et des équipements de routeur de bordure destinés à la distribution de trafic de données dans le réseau et des applications de réseau central avec au moins une tête de réseau vidéo (VHE), ladite tête de réseau vidéo (VHE) conservant en mémoire une pluralité de fichiers de données vidéo d'origine, chacun des niveaux de structure de réseau comprenant au moins un composant avec un moyen respectif conçu de façon à exécuter un procédé de gestion de trafic de services de vidéo à la demande et de transferts de données vidéo en fonction de l'une des revendications ci-dessus.

7. Un système de gestion de trafic de services de vidéo à la demande (TMVDS) et de transfert de données vidéo dans un réseau, le système étant adapté de façon à exécuter l'une quelconque des revendications de procédé 1 à 5.

8. Le système de gestion de trafic selon la revendication 7, dans lequel l'équipement de locaux d'abonné est mis en oeuvre sous la forme d'un ordinateur personnel ou sous la forme d'un décodeur ou sous la forme d'une télévision.
